# EUROPEAN PATENT APPLICATION

(11) **EP 4 360 426 A1**
(43) Date of publication of application: **01.05.2024**
(21) Application number: 23202054.5
(22) Date of filing: 06.10.2023
(51) Int. Cl.: A01C 7/06, A01C 7/10

(54) **PLANTING MACHINE AND METHOD OF CONTROLLING SUCH**

(30) Priority: 27.10.2022 US 202218050200
(71) Applicant: Deere & Company, Moline, IL 61265 (US)
(72) Inventor: HUBNER, CARY S, 68163 Mannheim (DE); LICHTENWALNER, HOUSTIN LEE, 68163 Mannheim (DE); FERREN, BRAN, 68163 Mannheim (DE)
(74) Representative: Reichert, Christian

(57) **Abstract**

A planting machine (100) is disclosed. The planting machine (100) comprises: a furrow opener (114) that opens a furrow as the planting machine (100) moves across a field; a seed delivery system (120, 166) that delivers seeds to seed positions in the furrow; an optical seed detector (140) that captures an image of the furrow; an image processor (367) that identifies a planting characteristic based on the image; an actuator (109) that is actuated to apply a material to the field; an actuation identification system (256) that generates an actuation timing indicator indicative of a timing for actuating the actuator (109) to apply the material at material placement positions based on the planting characteristic; and an actuator control signal generator (258) that receives the actuation timing indicator and generates an actuator control signal based on the actuation timing indicator to control the actuator (109) to apply the material to the field. Further, a method of controlling such planting machine (100) is disclosed.

## Description

### FIELD OF THE DESCRIPTION

The present description relates to agricultural machines. More specifically, the present description relates to controlling application of material to a field, using an agricultural machine.

### BACKGROUND

There is a wide variety of different types of agricultural machines that apply material to an agricultural field. Some such agricultural machines include sprayers, tillage machines with side dressing bars, air seeders, and planters that have row units.

As one example, a row unit is often mounted to a planter with a plurality of other row units. The planter is often towed by a tractor over soil where seed is planted in the soil, using the row units. The row units on the planter follow the ground profile by using a combination of a down force assembly that imparts a down force to the row unit to push disk openers into the ground and gauge wheels to set depth of penetration of the disk openers.

Row units can also be used to apply material to the field (e.g., fertilizer to the soil, to a seed, etc.) over which the row units are traveling. In some scenarios, each row unit has a valve that is coupled between a source of material to be applied, and an application assembly. As the valve is actuated, the material passes through the valve, from the source to the application assembly, and is applied to the field. The application assembly may include a nozzle as well.

Many current systems apply the material in a substantially continuous way. For instance, where the application machine is applying a liquid fertilizer, it actuates the valve to apply a substantially continuous strip of the liquid fertilizer. The same is true of materials that provide other liquid substances, or granular substances, as examples.

The discussion above is merely provided for general background information and is not intended to be used as an aid in determining the scope of the claimed subject matter.

### SUMMARY

Locations of seeds in a field can be identified using an optical seed detector. A material is applied to the field, based upon the seed locations.

This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a top view of one example of a planting machine, shown in a partial pictorial and partial schematic form.
FIG. 2 is a side view showing one example of a row unit of the planting machine illustrated in FIG. 1.
FIG. 3 is a side view showing another example of a row unit of the planting machine illustrated in FIG. 1.
FIG. 4 is a side view showing another example of a row unit of the planting machine illustrated in FIG. 1.
FIG. 5 is a block diagram showing one example of a material application control system.
FIG. 6 is a block diagram showing one example of an event driven processing system.
FIG. 7 is a flow diagram showing one example of the operation of the event driven processing system and the material application control system.
FIG. 8 shows one example of the architecture illustrated in FIG. 1, deployed in a remote server environment.
FIGS. 9, 10, and 11 show examples of mobile devices that can be used as operator interface mechanisms in the architectures shown in the previous Figures.
FIG. 12 is a block diagram showing one example of a computing environment that can be used in the architectures shown in the previous Figures.

### DETAILED DESCRIPTION

As discussed above, many current systems apply material to a field in a relatively continuous way. This can result in wasted material. For instance, some material that is applied at certain locations between seeds or plants in a field may be unnecessary. This can result in lower productivity and lower efficiency. This problem can be exacerbated in instances where the material is applied at a relatively high rate, such as in the case of high rate fertilizer application.

The present description thus proceeds with respect to a system that detects a seed using an optical seed detector and identifies a specific location, e.g., a seed location, and controllably dispenses or applies material, based upon the detected seed, the seed location (and/or position) in a field, or another attribute or characteristic of the detected seed or another planting characteristic. The system can do this by capturing an image of the furrow opened by the planting machine and by sensing seeds in the image and then calculating a time when an application valve, nozzle or other actuator (e.g., a pump) should be actuated to apply the material, based upon the location of the valve or actuator relative to the location of the seed.

Also, the present description proceeds with respect to the examples being deployed on a row unit of a planter. They could just as easily be deployed on a sprayer, an air seeder, a tillage machine with a side-dress bar, or other piece of agricultural equipment that is used to apply a material.

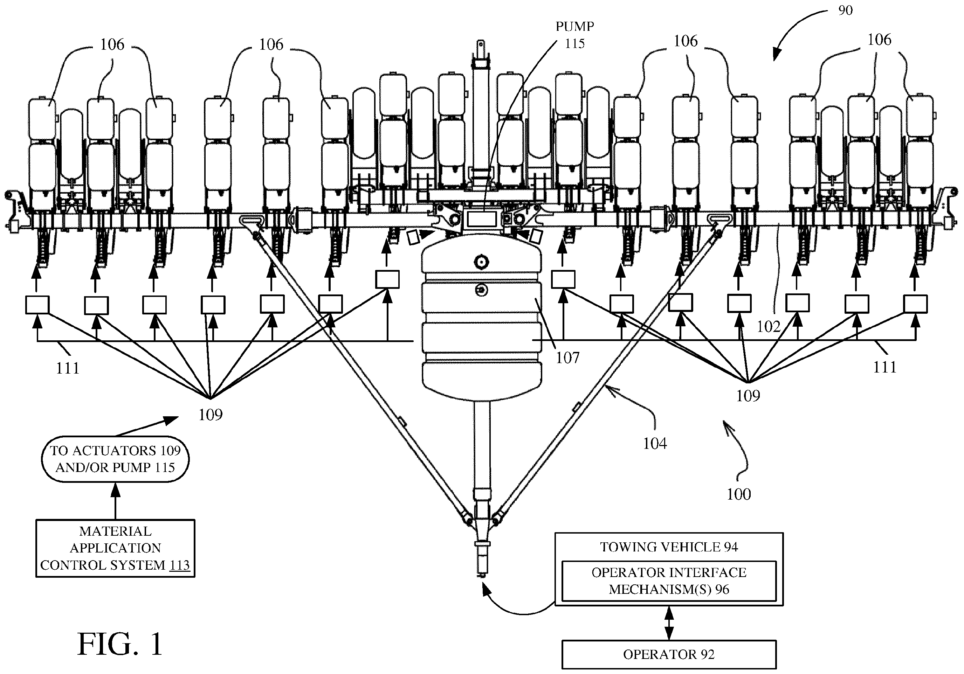

FIG. 1 is a partial pictorial, partial schematic top view of one example of an architecture 90 that includes agricultural planting machine 100, towing vehicle 94 that is operated by operator 92, and material application control system 113 which can be on one or more individual parts of machine 100, centrally located on machine 100, or on towing vehicle 94. Operator 92 can illustratively interact with operator interface mechanisms 96 to manipulate and control vehicle 94, system 113, and some or all portions of machine 100. Machine 100 is a row crop planting machine that illustratively includes a toolbar 102 that is part of a frame 104. FIG. 1 also shows that a plurality of planting row units 106 are mounted to the toolbar 102. Machine 100 can be towed behind towing vehicle 94, such as a tractor. FIG. 1 shows that material can be stored in a tank 107 and pumped through a supply line 111 so the material can be dispensed in or near the rows being planted. In one example, a set of devices (e.g., actuators) 109 is provided to perform this operation. For instance, actuators 109 can be individual pumps that service individual row units 106 and that pump material from tank 107 through supply line 111 so the material can be dispensed on the field. In such an example, material application control system 113 controls the pumps 109. In another example, actuators 109 are valves or nozzles and one or more pumps 115 pump the material from tank 107 to valves or nozzles 109 through supply line 111. In such an example, material application control system 113 controls valves or nozzles 109 by generating valve or nozzle control signals, e.g., on a per-seed basis, as described below. The present discussion proceeds by describing the actuator 109 as a valve or actuator. It will be noted that actuator 109 can be a pump, a nozzle, a valve, or another actuator or combination of actuators. The control signal for each actuator 109 can, in one example, be a pulse width modulated control signal. The flow rate through the corresponding valve 109 can be based on the duty cycle of the control signal (which controls the amount of time the valve is open and closed). The flow rate can be based on multiple duty cycles of multiple valves or based on other criteria. Further, the material can be applied in varying rates on a per-seed or per-plant basis. For example, fertilizer may be applied at one rate when the fertilizer is being applied at a location spaced from a seed location and at a second, higher, rate when the fertilizer is being applied closer to the seed location. These are examples only.

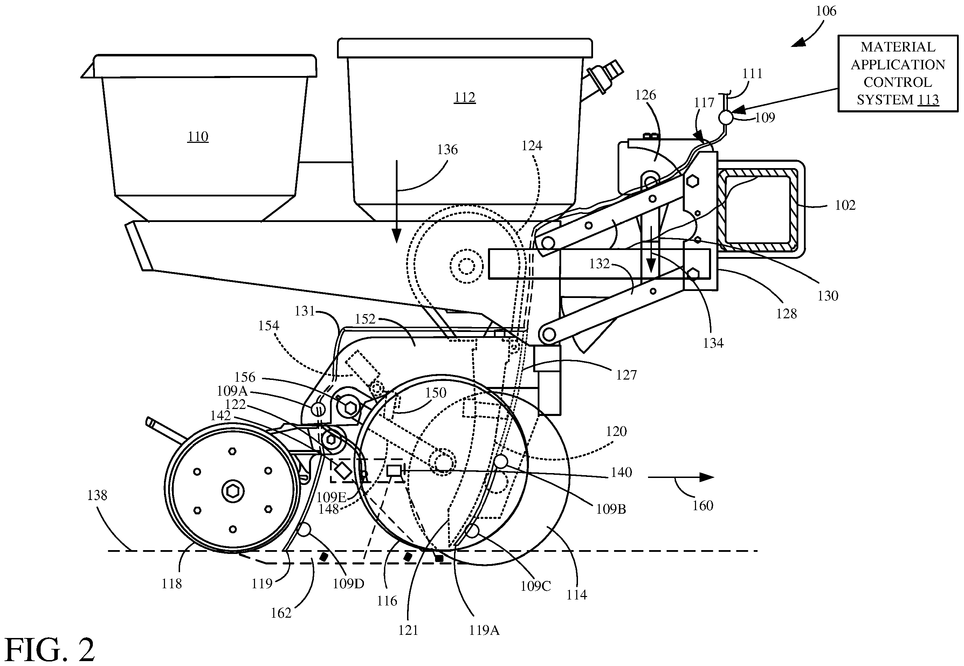

FIG. 2 is a side view of one example of a row unit 106, with valve 109 and system 113 shown as well. Actuator 109 is shown in five possible locations labeled as 109, 109A, 109B, 109C, 109D, and 109E, but other locations are possible as well. Row unit 106 illustratively includes a chemical tank 110 and a seed storage tank 112. Row unit 106 also illustratively includes one or more disc openers 114, a set of gauge wheels 116, and a set of closing wheels 118. Seeds from tank 112 are fed into a seed meter 124, e.g., by gravity or from a centralized commodity distribution system (e.g., employing pneumatic commodity distribution to each row unit). The seed meter 124 controls the rate at which seeds are dropped into a seed tube 120 or other seed delivery system, such as a brush belt or flighted belt from seed storage tank 112. The seeds can be sensed in the furrow by an optical seed sensor 122, which can include an image capture device 140 and illumination device 142. Image capture device 140 can be a camera, or another optical seed sensor.

In the example shown in FIG. 2, liquid material is passed, e.g., pumped or otherwise forced, through supply line 111 to an inlet end of actuator 109. Actuator 109 is controlled by control system 113 to allow the liquid to pass from the inlet end of actuator 109 to an outlet end of actuator 109.

As liquid passes through actuator 109, the liquid travels through an application assembly 117 from a proximal end (which is attached to an outlet end of actuator 109) to a distal tip (or application tip) 119, where the liquid is discharged into a trench, or proximate a trench or furrow 162, opened by disc opener 114 (as is described in more detail below). The distal tip 119 can be located in one or more different locations on row unit 106, some of which are labeled 119 and 119A.

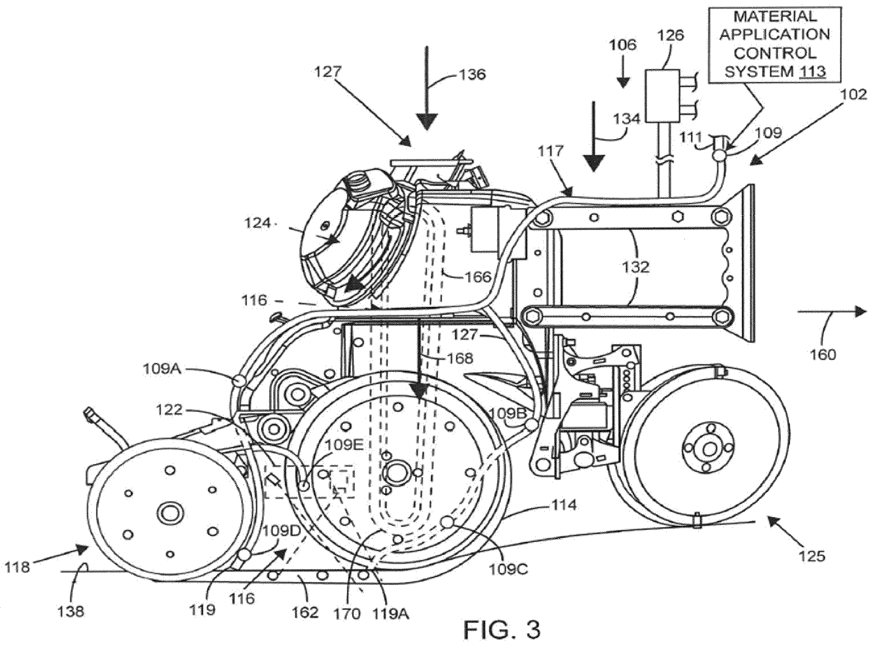

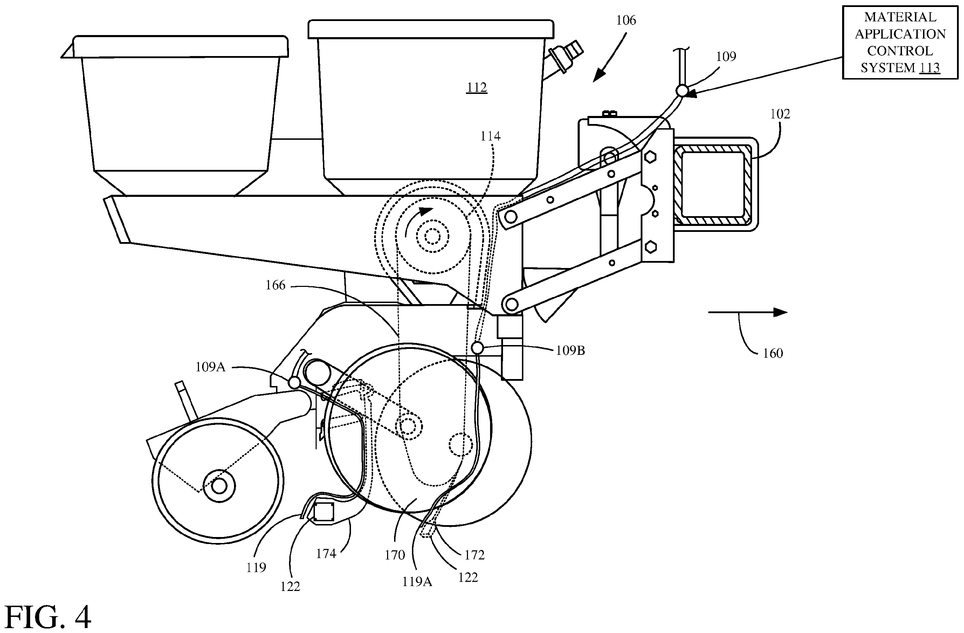

Some parts of row unit 106 will now be discussed in more detail. First, it will be noted that there are different types of seed meters 124, and the one that is shown is shown for the sake of example only. In one example, each row unit 106 need not have its own seed meter. Instead, metering or other singulation or seed dividing techniques can be performed at a central location, for groups of row units 106. The metering systems can include finger pick-up discs and/or vacuum meters (e.g., having rotatable discs, rotatable concave or bowl-shaped devices), among others. The seed delivery system can be a gravity drop system (such as seed tube 120 shown in FIG. 2) in which seeds are dropped through the seed tube 120 and fall (via gravitational force) through the seed tube and out the outlet end 121 into the seed trench 162. Other types of seed delivery systems may be or may include assistive systems, in that they do not simply rely on gravity to move the seed from the metering system into the ground. Instead, such assistive systems actively assist the seeds in moving from the meter to a lower opening, where the seeds exit or are deposited into the ground or trench. These can be systems that physically capture the seed and move it from the meter to the outlet end of the seed delivery system or they can be pneumatic systems that pump air through the seed tube to assist movement of the seed. The air velocity can be controlled to control the speed at which the seed moves through the delivery system. One example of a row unit 106 with an assistive system is described in more detail below with respect to FIGS. 3 and 4.

A downforce actuator 126 is mounted on a coupling assembly 128 that couples row unit 106 to toolbar 102. Actuator 126 can be a hydraulic actuator, a pneumatic actuator, a spring-based mechanical actuator, or a wide variety of other actuators. In the example shown in FIG. 2, a rod 130 is coupled to a parallel linkage 132 and is used to exert an additional downforce (in the direction indicated by arrow 134) on row unit 106. The total downforce (which includes the force indicated by arrow 134 exerted by actuator 126, plus the force due to gravity acting on row unit 106, and indicated by arrow 136) is offset by upwardly directed forces acting on closing wheels 118 (from ground 138) and disc opener 114 (again from ground 138). The differential force (which may also be referred to herein as the downforce margin) acts on the gauge wheels 116. The gage wheels 116 can be set to control the depth of the furrow 162 opened by openers 114. The load on gage wheel 116 can be sensed by a gauge wheel load sensor, which may be located anywhere on row unit 106 where it can sense that load. A set of gauge wheel control arms (or gauge wheel arm) 148 movably mount gauge wheels 116 to shank 152 and control an offset between gauge wheels 116 and the discs in double disc opener 114, to control planting depth. Arms (or gauge wheel arms) 148 illustratively abut against a mechanical stop (or arm contact member-or wedge) 150. The position of mechanical stop 150 relative to shank 152 can be set by a planting depth actuator assembly 154. Control arms 148 illustratively pivot around pivot point 156 so that, as planting depth actuator assembly 154 actuates to change the position of mechanical stop 150, the relative position of gauge wheels 116, relative to the double disc opener 114, changes, to change the depth at which seeds are planted.

In operation, row unit 106 travels generally in the direction indicated by arrow 160. The double disc opener 114 opens a furrow 162 in the soil 138, and the depth of the furrow 162 is set by planting depth actuator assembly 154, which, itself, controls the offset between the lowest parts of gauge wheels 116 and disc opener 114. Seeds are dropped through seed tube 120into the furrow 162 and closing wheels 118 close the furrow 162, e.g., push soil back into the furrow 162.

When the seeds are dropped into the furrow 162, the seeds can be sensed by seed sensor 122. Illumination source 142 may direct illumination onto an area of furrow 162. Camera 140 captures an image (or a sequence of images) of the illuminated area. An image processing system (located on sensor 122, material application control system 113, at a remote location, and/or elsewhere) processes the image(s) to identify planting characteristics, such as seed location, seed type, seed orientation, seed (or furrow) depth, seed spacing, seed-to-soil contact, furrow integrity, anomalous material (such as rocks, plant matter, etc.), and/or other planting characteristics. The optical seed sensor 120 can be placed in a variety of different locations on row unit 106, or on different components of row unit 106, to obtain an image (or a sequence of images) of seeds in the furrow 162. Material application control system 113 illustratively receives a signal from seed sensor 122, indicating the planting characteristics discussed above, or other planting characteristics. Material application control system 113 can also receive a ground speed signal indicative of a speed of movement of row unit 106, and then determines when to actuate actuator 109 so that material being applied through application assembly 117 (and out distal tip 119 of application assembly 117) will be applied at a desired location relative to the seed in trench or furrow 162 and/or based on other planting characteristics identified by processing the image(s) captured by optical seed sensor 122. This is all described in greater detail herein as well. One brief example will be described now, by way of overview.

Material application control system 113 illustratively is programmed with, or detects a distance, e.g., a longitudinal distance, that the distal tip 119 is from the exit end 121 of seed tube 120. System 113 also illustratively senses, or is provided (e.g., by another component, such as a GPS unit or a tractor, etc.), the ground speed of row unit 106. As the row units 106 on an implement being towed by a prime mover (e.g., a tractor) may move faster or slower than the tractor during turns, particularly as the width of the implement increases, the material application control system 113 may sense or be provided the ground speed of each row unit 106 of the implement. By way of example, the material application control system 113 may sense or be provided information when the implement is turning right indicating that the rightmost row unit 106 is travelling slower, i.e., has a lower ground speed, than the leftmost row unit 106. Further, the material application control system 113 detects, is provided, or is programmed with, system data indicating the responsiveness of actuator 109 under certain conditions (such as under certain temperature conditions, certain humidity conditions, certain elevations, when spraying a certain type of fluid, etc.) and it also detects, is provided, or programmed with one or more properties of the material being applied through actuator 109 (as this may affect the speed at which actuator 109 responds, the time it takes for the material to travel through application assembly 117 to the distal tip 119 and be applied to furrow 162, etc.). With this type of information, once system 113 receives a seed sensor signal indicating that a seed is identified in a captured image of the furrow 162, system 113 determines the seed location and/or other planting characteristics if they are not already determined and provided by seed sensor 122. For instance, the planting characteristics may be determined by an image processor on seed sensor 122, or the image of the furrow may be provided to an image processor on system 113 which identifies the planting characteristics. System 113 then determines when tip 119 will be in a desired location relative to the seed location and system 113 actuates valve 109 to apply the material at the desired location relative to the seed. By way of example, it may be that some material is to be applied directly on the seed. In that case, system 113 times the actuation of actuator 109 so that the applied material will be applied at the seed location. In another example, it may be desirable to apply some material at the seed location and also apply material for a predetermined distance on either side of the seed location. In that case, system 113 generates the signal used to control actuator 109 so that the material is applied in the desired fashion. In other examples, it may be that the material is to be applied at a location between seeds in furrow 162. By way of example, relatively high nitrogen fertilizer may be most desirably applied between seeds, instead of directly on the seed. In that case, system 113 is illustratively programmed with the desired location of the applied material relative to seed location, so that system 113 can determine when to actuate actuator 109 in order to apply the material between seeds. Further, as discussed above, actuator 109 can be actuated to dispense material at a varying rate. System 113 can control multiple actuators 109 to apply different material relative to different seeds, to aim a nozzle through which the material travels or to otherwise aim the material relative to the seed location, or to control the shape of the spray existing the tip 119. As another example, it may be that two or more different types of seed are being planted and optical seed sensor 122 generates an output indicative of the location of the sensed seed and the type of seed detected. System 113 can then generate control signals to apply a first type of material (or quantity of material) to seeds of a first type and a second type of material (or quantity of material) to seeds of a second type. In another example, system 113 can control actuator 109 to dispense more material on the seed location and less material at locations spaced from the seed location, or vice versa, or according to other patterns.

It will be noted that a wide variety of different configurations are contemplated herein. For instance, in one example, FIG. 2 shows that application assembly 117 can be configured with multiple fluid lines 127 and 131, each having a distal tip 119A and 119, respectively, with a separate independently controllable actuators 109A and 109B, respectively. In another example, FIG. 2 shows that actuator 109 may be placed closer to the distal tip 119A and 119, (such as indicated by actuator 109C and 109D). In this way, there is less uncertainty as to how long it will take the material to travel from the actuator 109C and 109D to the distal tip 119. In yet another example, actuator 109 can be incorporated into an enclosure that houses the illumination source 142 and optical detector 140, such as at location 109E. When seed sensor 122 detects a seed, system 113 may be able to time the actuation of actuator 109 to apply material to furrow 162based on the seed location. Similarly, when actuator 109 includes a controllable nozzle, system 113 can aim the nozzle through which the material is sprayed, or control the spray shape based on the detected seed location and/or other planting characteristics. Optical seed sensor 122 may, for instance, detect that the seed is to one side of a centerline of the furrow. In that case, system 113 may control the nozzle to aim the spray in a desired direction of material application or to control the shape of the spray, based on the seed location. All of these and other configurations are contemplated herein.

FIG. 3 is similar in some ways to FIG. 2 (although the row unit 106 shown in FIG. 3 is a different row unit from that shown in FIG. 2), and similar items are similarly numbered. FIG. 3 shows that row unit 106 includes row cleaner 125 which clears residue or other material ahead of the opener 114. FIG. 3 also shows that row unit 106 has a seed hopper 127 that receives seed and provides the seed to seed meter 124. Also, instead of the seed delivery system being a seed tube 120, which relies on gravity to move the seed to the furrow 162, the seed delivery system shown in FIG. 3 is an assistive seed delivery system 166. Assistive seed delivery system 166 also illustratively has an optical seed sensor 122 disposed therein. Assistive seed delivery system 166 captures the seeds as they leave seed meter 124 and moves the seeds in the direction indicated by arrow 168 toward furrow 162. System 166 has an outlet end 170 where the seeds exit assistive system 166, into furrow 162, where the seeds reach their final resting location.

In a system such as that shown in FIG. 3, actuator 109 can be placed at any of a wide variety of different locations, some of which are illustrated by numbers 109, 109A, 109B, 109C, 109D, and 109E. Also, it should be noted that there can be more than one seed sensor, seed sensors of different types, seed sensors at different locations, etc.

FIG. 4 is similar to FIG. 2 and similar items are similarly numbered. However, in FIG. 4, row unit 106 is also provided with members 172 and/or 174. Members 172 and/or 174 can be spring biased into engagement with the soil, or rigidly attached to the frame of row unit 106. In one example, member 172 can be a seed firmer or a furrow shaper, which contacts the soil in the area within or closely proximate the furrow, and after the furrow is opened, and before or after the seed is placed therein. Member 172 can thus contact the side(s) of the furrow, the bottom of the furrow, an area adjacent the furrow, or other areas. Member 172 can be fitted with an optical seed sensor 122. In one example, optical seed sensor 122 may have an illumination source and a photodetector (such as a single pixel photodetector, an image capture device, etc.) not separately shown and which captures an optical characteristic of the furrow after the seed is placed in the furrow. Sensor 122 optically senses the seed presence as member 172 moves adjacent to, ahead of, or over the seed. Sensor 122 illustratively provides a signal to material application control system 113 indicating the presence of the sensed seed and may also provide other planting characteristics.

In such an example, it may be that actuator 109 is placed at the location of actuator 109B, shown in FIG. 4, and the outlet end of the application assembly is shown at 119A. In the example shown in FIG. 4, outlet end 119A is shown closely behind member 172 relative to the direction of travel indicated by arrow 160. Outlet end 119A can be disposed on the opposite side of member 172 as well (such as forward of member 172 in the direction of travel indicated by arrow 160). In such an example, the seed sensor 122 senses the seed at a location that corresponds to its final seed location, or that is very closely proximate its final seed location. This may increase the accuracy with which seed sensor 122 senses the final seed location.

Also, in the example shown in FIG. 4, row unit 106 can have member 174 in addition to, or instead of, member 172. Member 174 can also be configured to engage the soil within, or closely proximate, the trench or furrow. Member 174 can be configured to follow within the furrow, but without engaging the soil as well. Member 174 can have a seed sensor 122 that senses the presence of a seed (or a characteristic from which seed presence can be derived) and may sense other plating characteristics as well. Seed sensor 122 can be placed so that it closely follows the exit end 121 of the seed tube 120 (in FIG. 2), or the exit end 170 of the assistive delivery system 166. Also, actuator 109 can be placed at the position illustrated at 109A or elsewhere.

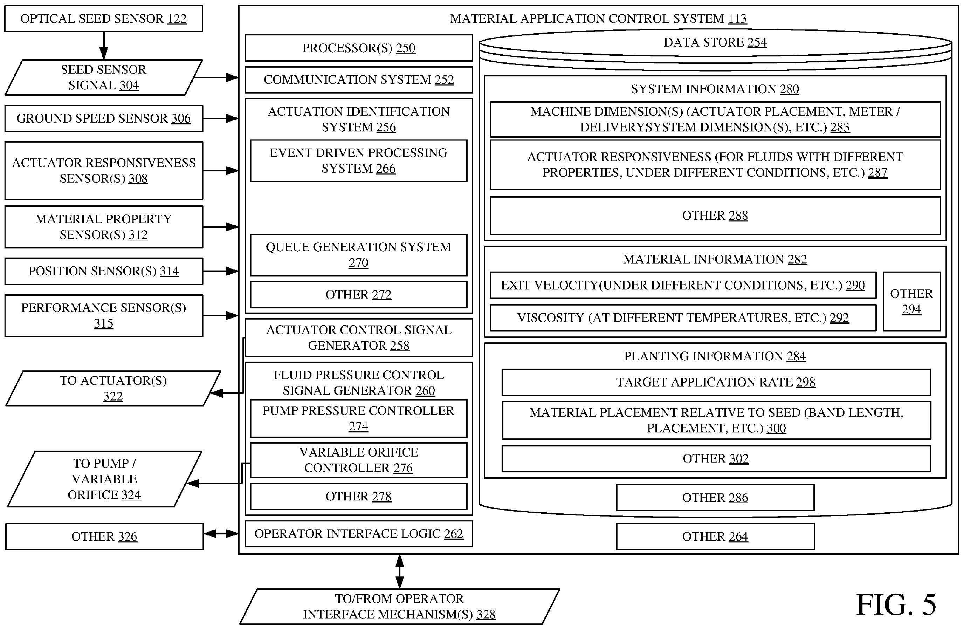

FIG. 5 is a block diagram showing one example of material application control system 113 in more detail. In the example shown in FIG. 5, it is assumed that actuators 109 can be valves and may also have controllable nozzles that can be controlled to aim the material to be applied and/or to change the shape (width, geometric shape, etc.) of the spray coming from the nozzle. Further, it is assumed that the material to be applied is pumped to actuators 109 by pump 115. Of course, this is just one example and actuators 109 could be pumps or other actuators as well. In the example shown in FIG. 5, system 113 illustratively includes one or more processors 250, communication system 252, data store 254, actuation identification system 256, actuator control signal generator 258, fluid pressure control signal generator 260, operator interface logic 262, and system 113 can include a wide variety of other items 264. FIG. 5 also shows that actuation identification system 256 can include event driven processing system 266, queue generation system 270, and a wide variety of other items 272. Fluid pressure control signal generator 260 illustratively includes pump pressure controller 274, variable orifice controller 276, and/or other items 278.

Data store 254 can include a wide variety of different types of information. The information can be pre-configured or pre-programmed into data store 254, or the information can be sensed by sensors and stored in data store 254 intermittently (such as periodically), or the information can be regularly updated based on those sensor inputs. By way of example, data store 254 illustratively includes system information 280, material information 282, planting information 284, and a wide variety of other information 286.

System information 280 illustratively includes information about the planter 100, the delivery system 120, 166, and/or other items that are used to plant seed. System information 280 can include information that can be used to identify when to apply material relative to the seed location of a seed in furrow 162. Therefore, information 280 can include information that allows actuation identification system 256 to identify a timing of when the actuators 109 should be opened to apply the material, relative to the seed location.

As examples, system information 280 can include machine dimensions 283. These dimensions can include dimensions that indicate where the actuator 109 is placed relative to the outlet opening of the seed delivery system. Dimensions 283 can include dimensional information indicating where the actuator 109 is placed relative to the seed sensor 122. Dimensions 283 can include information such as the size, e.g., one or more size dimensions, of the seed delivery system 120, 166. Dimensions 283 can include a wide variety of other machine dimension information 283 as well.

System information 280 also illustratively includes actuator responsiveness information 287. Information 287 can indicate the responsiveness of the actuator 109 that is being used to apply the material. In one example, the actuator 109 may be a solenoid valve so that there is a latency between when a "valve open" signal is applied and when the solenoid actually opens the valve. The same is true for closing the valve. That is, there may be a latency between when the "valve close" signal is applied and when the valve actually closes. In addition, the actuator responsiveness may change based upon the particular properties of the material that is flowing through the valve. The actuator responsiveness may change based upon the type of actuator (e.g., the type of valve, nozzle, or pump) that is being used, and the responsiveness may change under different ambient conditions (e.g., it may take longer to cycle when the weather is cold than when the weather is warm, etc.). The actuator responsiveness information 287 can indicate actuator responsiveness given these and other types of information. System information 280 can include a wide variety of other information 288, as well.

Material information 282 illustratively identifies properties of the material that is being applied by the system. For instance, material information 282 may include exit velocity information 290 that identifies a velocity at which the material exits the actuator 109 that is being used to apply it. Again, the exit velocity of the material may change based on the material or under different conditions, and the exit velocity information 290 may indicate how the exit velocity changes as well.

Material information 282 may also include viscosity information 292, which identifies the viscosity or other liquid properties of the material. The viscosity may change at different temperatures or under other circumstances, and viscosity information 292 will illustratively indicate this. The material information 282 can include a wide variety of other information 294 indicative of other properties of the material being applied. Planting information 284 can include a wide variety of different types of information indicative of the planting operation. For example, information 284 can include target application rate information 298 that indicates a target application rate for the material being applied. Information 284 can include material placement relative to seed information 300 that indicates placement properties of the material, or application pattern for the material. For instance, where the material is liquid material and is being applied in a band of liquid, information 284 may indicate the length of each application band to be applied by the actuator 109. Information 284 may indicate a placement of that band relative to the seed location. For instance, where the band is to be four inches long, the placement information may indicate a relative placement of the center of the band (along its longitudinal length) relative to seed location. In this way, where the material is to be applied at the seed location, then the center of the band will illustratively correspond to the seed location. However, where the material is to be applied at a location other than the seed location, then the center of the band will illustratively be offset from the seed location by a desired amount. Similarly, the application rate may vary within an application band. For instance, the material may be applied more heavily near the center of the band than at either end of the band or vice versa. This type of information can be included in information 300. The planting information 284 can include a wide variety of other information 302, indicative of the planting operation, as well.

FIG. 5 also shows that material application control system 113 illustratively receives one or more seed sensor signals 304 that may be generated from one or more of the optical seed sensors 122, that optically sense seed in the furrow. Seed sensor signal 304 may illustratively indicate a time when the particular sensor senses the presence of a seed. Seed sensor signal 304 may also be the output of an image processor (that is part of seed sensor 122). The seed sensor signal 304 may thus be indicative of the other planting characteristics as well. It will be noted that the image processor may be located in seed sensor 122, in system 113, or remotely (such as in the cloud), or elsewhere. Regardless of its location, the image processor identifies the planting characteristics by processing the image and provides the planting characteristics to various components in system 113.

FIG. 5 also shows that, in one example, system 113 includes an input from ground speed sensor 306, which senses the ground speed of row unit 106. The ground speed sensor 306 may be located on the towing vehicle or elsewhere, and illustratively provides a sensor signal indicative of ground speed of row unit 106. Sensor 306 may be a speedometer, a sensor that senses rotation speed of the wheels or a drive shaft, a global navigation satellite system (GNSS) receiver, or another sensor.

As discussed above, some of the information stored in data store 254 may be pre-configured or pre-defined and loaded into data store 254. In another example, the information may be sensed by various sensors. Therefore, in one example in which actuator responsiveness is sensed, system 113 receives the actuator responsiveness information 286 from a actuator responsiveness sensor 308. Sensor 308 may illustratively sense the movement of a solenoid, or other actuator, to sense how responsive the actuator 109 is to the control signals that are applied to it. Thus, sensor 308 may provide a signal indicative of the latency between applying a "valve open" signal (or "pump on" signal) and when the valve actually opens (or the pump turns on), and indicative of latency between applying a "valve close" signal (or "pump off' signal) and when the valve actually closes (or the pump turns off), among other things.

Similarly, the material information 282 can be sensed as well by material property sensors 312. Those sensors may sense such things as material temperature and material viscosity, among other things. Further, optical sensors can sense dispersed material (such as chemicals) and adaptively correct the actuator responsiveness information 286 as well. System 113 can also receive an input from a position sensor 314. Position sensor 314 may include a GNSS receiver, a LORAN system, a cellular triangulation system, or another type of position system that provides a signal indicative of the position of the sensor 314 in a global or local coordinate system. Such a sensor can also be used to determine ground speed and machine heading, among other things.

Control signal generator 258 illustratively generates control signals 322 that are sent and/or applied to the actuators 109 in order to apply the material. Control signals 322 can control actuators 109 to turn them on and off. Signals 322 can aim a nozzle or control a nozzle to modify the shape of the spray of material exiting the nozzle and/or to perform other control operations. This is also described in greater detail herein.

In some examples, the material being applied is a fluid that is provided as fluid under pressure by pump 115. In that case, the pump displacement may be controlled to control the fluid pressure as the material is applied. Similarly, the actuator may be provided with a variable orifice. In that case, the variable orifice may be controlled as well. Therefore, fluid pressure control signal generator 260 illustratively generates outputs 324 that illustratively control the pump and/or variable orifice, in those scenarios. In a scenario in which actuators 109 are pumps, outputs 324 can control those pumps as well.

System 113 can include a wide variety of other inputs and system 113 can generate a wide variety of other outputs as well, as indicated by block 326.

FIG. 5 also shows that, in one example, operator interface logic 262 may generate signals that are output to operator interface mechanisms 96, and logic 262 can receive information from those mechanisms as well, as indicated by block 328.

Before describing the overall operation of material application control system 113, a description of some of the items in system 113 and their operation will first be provided. Communication system 252 can be any of a wide variety of different types of communication systems that allow material application control system 113 to communicate with a control system on towing vehicle 94 and/or operator interface mechanisms 96. Communication system 252 can also allow items on system 113 to communicate with one another, and to communicate with one or more different remote computing systems. Therefore, for instance, communication system 252 can include a controller area network - CAN - communication system, a local area network, a wide area network, a near field communication system, a cellular communication system, or any of a wide variety of other networks or combinations of networks and communication systems.

Actuation identification system 256 illustratively receives one or more of the inputs discussed above and identifies when the actuators 109 are to be actuated, any direction they are to be aimed, and other control parameters in order to apply material at a desired location relative to the location of the seeds being placed in furrow 162. In one example, event driven processing system 266 determines when the actuators 109 are to be actuated based on an event, such as based upon receiving an indication from optical seed sensor signal 304 that a seed has been sensed. For instance, referring to FIG. 3, assume that optical seed sensor 122 detects a seed in furrow 162. Then, based upon the seed location, the location of the actuator 109 on row unit 106, the actuator responsiveness, the exit velocity or viscosity of the material being applied, the ground speed of row unit 106, and based upon the desired placement of the material relative to the seed location (as indicated by the corresponding information in data store 254 or based on the inputs from the sensors discussed above), and/or based upon other planting characteristics, event driven processing system 266 calculates when, and how the actuators 109 should be actuated in order to apply the material at the desired place, relative to the seed location. The actuator nozzle, valve 109 can be movably mounted to row unit 106 so the direction in which the material is applied can be controllably modified to the right or left of the centerline of the furrow, or in a forward or backward direction relative to the direction of travel of row unit 106. Thus, application of the material can be aimed by controlling the orientation of the actuator 109 based on the sensed planting characteristics and/or based on other information.

In another example, queue generation system 270 generates a set of actuation timing signals, indicating when and how actuators 109 should be actuated, for a future sequence of actuations. For instance, queue generation system 270 may generate a queue of timing signals that are generated by event driven processing system 266 based upon a detected speed spacing in furrow 162 and provide that plurality of queued timing signals to control signal generator 258. Control signal generator 258 can receive that set of signals and generate actuator control signals based upon the queued sequence of timing signals. In this way, the network bandwidth for communication between actuation identification system 256 and control signal generator 258 need not be as high. By communicating a plurality of actuation timing signals as a queued sequence of signals, the frequency with which those signals need to be sent can be greatly reduced over an implementation in which each actuation timing signal is sent, individually and separately, for each actuation of an actuator 109.

Control signal generator 258 can generate the valve control signals in a wide variety of different ways. Generator 258 can generate those signals and apply them through a hardware wiring harness, through wireless communication, or in other ways.

In some examples, the fluid pressure of the material to be applied is to be controlled. For instance, increasing the fluid pressure may increase the exit velocity of the material as it is applied by the actuator 109 being controlled. Similarly, where the outlet end of the actuator 109 or distal tip 119 is not directed to apply material vertically, but has a horizontal component to its orientation, increasing the fluid pressure may change the trajectory of the fluid after it exits the actuator 109 or distal tip 119. This change in trajectory will change the location on the ground where the material is applied.

In the same way, where the actuator is provided with a variable orifice, varying the orifice may change the trajectory or exit velocity of the material as well. Thus, pump pressure controller 274 can control the pump pressure to obtain a desired exit velocity and/or trajectory of the material being applied. Variable orifice controller 276 can variably control the orifice to also achieve a desired exit velocity and/or trajectory of the applied material. In some examples, variable orifice controller 276 and pump pressure controller 274 can work in concert to control the exit velocity and/or trajectory of the material being applied.

Operator interface logic 262 can generate information that is provided to operator interface mechanisms 96 so that operator 92 can interact with that information. Similarly, operator interface logic 262 can receive information indicative of operator inputs from operator 92 through operator interface mechanisms 96. Logic 262 can communicate that information to the various items or components on/of material application control system 113.

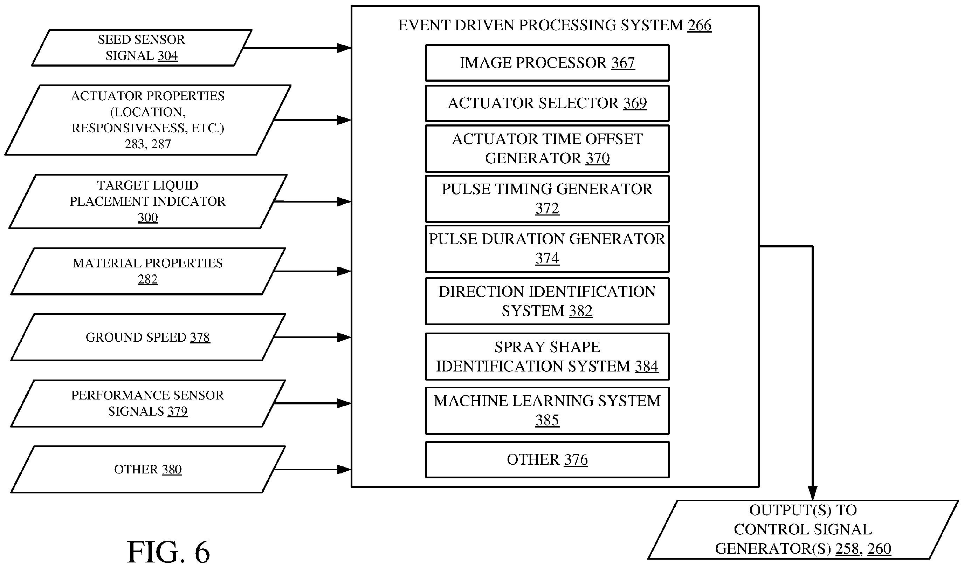

FIG. 6 is a block diagram showing one example of event driven processing system 266 in more detail. In the example shown in FIG. 6, event driven processing system 266 can include image processor 367 (where the images of the furrow are not processed elsewhere), actuator selector 369, actuator time offset generator 370, pulse timing generator 372, pulse duration generator 374, direction identification system 382, spray shape identification system 384, machine learning system 385, and other items 376. It will be noted that various generators, processors, and/or systems in event driven processing system 266 can be one or more artificial neural networks, or other classifiers that receive inputs and generate an output based upon those inputs. The generators, processors, and/or systems can include one or more models, rules-based systems, or other items that receive inputs and generate an output based upon the received inputs. Also, in the example shown in FIG. 6, event driven processing system 266 is shown receiving seed sensor signal 304, actuator properties (such as location, responsiveness, etc.) 283, and 287, target liquid placement indicator 300, material properties 282, ground speed 378, and other items 380. Image processor 367 can receive the image(s) captured by seed sensor 122 and process those images to obtain the planting characteristics. Where the row unit 106 has a plurality of different actuators 109, then actuator selector 369 can be used to generate an output identifying one or more of the plurality of possible actuators that is/are to be actuated. For instance, it may be that the seed sensor signal 304 identifies the seed type, where multiple different seed types are being planted by row unit 106. If the seed is a first seed type, it may also be that a first material is to be applied to the furrow, whereas if the seed is a second seed type, then a second material is to be applied. By way of example only, row unit 106 may be planting two different types of corn (such as refuge corn and genetically modified corn) where the refuge corn is not resistant to a pest (such as corn borer). In that case, when the seed sensor signal 304 identifies the seed as a refuge seed, then actuator selector 369 can select an actuator that is used to apply an insecticide to the seed. However, when seed sensor signal 304 identifies the seed as a genetically modified seed that is resistant to corn borer, then actuator selector 369 may select a different actuator that applies a different material, other than the insecticide, or may generate an output indicating that none of the actuators are to be actuated. Actuator time offset generator 370 uses the actuator properties 283, and 287 as well as the material properties 282 to determine the delay or latency between applying an actuator control signal and the actuator actually performing that operation. For instance, actuator time offset generator 370 determines the latency between when a "valve on" signal is applied to a valve and when the valve or nozzle actually opens. Actuator time offset generator 370 also generates an offset indicative of the latency or delay between when a "valve off' signal is applied to the valve and when the valve actually closes.

Pulse timing generator 372 obtains the location of the seed in the furrow as indicated by seed sensor signal 304 (or image processor 367), as well as the target liquid placement indicator, the actuator location, and the ground speed 378 and determines the timing indicative of when the actuator 109 should be turned on (e.g., when the "actuators on" signal should be applied to the actuator 109), given the latency through the actuator indicated by actuator time offset generator 370. For instance, if the seed sensor signal 304 indicates that the seed is twelve inches ahead of the actuator outlet or distal tip 119, and the row unit 106 is running at a particular ground speed 378, and the liquid is to be placed at a particular location relative to the seed as indicated by indicator 300, then pulse timing generator 372 determines when the "actuator on" signal should be applied to the actuator 109 so that the actuator turns on in time to apply the material at the target location. The material properties 282 can also be used to determine how quickly the material will exit the actuator 109 or distal tip 119 and how long it will take the material to reach the furrow after it exits the actuator 109 or distal tip 119. In addition, it will be appreciated that the timing of the actuator control signals can be controlled on a per-seed basis or by synchronizing the timing of the control signals to seed spacing and adapting every N seeds to save processing power. Also, frequency of the control signal scan be varied based on ground speed. The timing of the actuator control signals can be synchronized to a pulse width modulated valve control signal as well.

Pulse duration generator 374 uses the target liquid placement indicator 300, the material properties 282, and the ground speed 378 to determine how long the actuator should be open in order to apply the material at the desired location. Direction identification system 382 uses the location of the seed identified by seed sensor signal 304 in the furrow to identify the direction that the actuator is to be aimed in order to place the material at the desired location relative to the seed location. For instance, if the seed is located on one side of the elongate centerline of the furrow, then direction identification system 382 may generate an output indicating that the actuator is to be aimed to that side of the furrow, if the material is to be applied on or near the seed location. However, if the material is to be applied at a location other than the seed location, then direction identification system 382 can generate an output indicating that the actuator should be controlled to aim the material to the opposite side of the centerline of the furrow from the seed so that the material is placed next to, but not over, the seed location. Again, as discussed above, the direction of the material as it exists the actuator can be modified by aiming the actuator or by changing the trajectory of the material by modifying the orifice or pressure of the material (by controlling the pump or the orifice of the actuator). The actuator can be aimed by controlling an actuator (an electric actuator, a hydraulic actuator, a pneumatic actuator, etc.) that re-orients the actuator in a desired direction.

Spray shape identification system 384 can generate an output indicating how to control a nozzle (for instance) to spray the material with a spray that has a desired geometric shape. For instance, it may be desired that the material is sprayed with a very narrow spray pattern so that only a small volume of material is applied and/or so that the material only covers the seed. In another example, it may be desired to spray the material a wider spray pattern such as a fan shaped spray pattern or a cone-shaped spray pattern or another wider pattern so that a larger volume of material is applied or so that the material not only covers the seed but also covers the furrow on all sides of the seed. For instance, it is currently believed that larger seeds are more likely to emerge than smaller seeds. Therefore, seed sensor signal 304 may identify the size of the seed as well. When sensor signal 304 identifies the seed as a larger seed relative to other seeds, then spray shape identification system 384 may generate an output indicating that the spray should have a pattern in which less volume of material (such as nitrogen) is applied to the seed. However, when the seed sensor signal 304 identifies the seed as a small seed, relative to the other seeds, then spray shape identification system 384 may generate an output indicating that the spray shape should be one where a larger volume of material is sprayed on the seed, to increase its chances of emergence. In another example, the spray pattern may be controlled to be a wider spray shape so that the entire furrow is covered between the seeds. These are only examples and the spray shape can be defined in other ways, having other shapes, as well. Event driven processing system 266 then generates outputs that are used by actuator control signal generator 258 and fluid pressure control signal generator 260. Control signal generators 258 and 260 can then generate the control signals 322 and 324 that are used to control the actuators 109 and the pump or variable orifice, as discussed above.

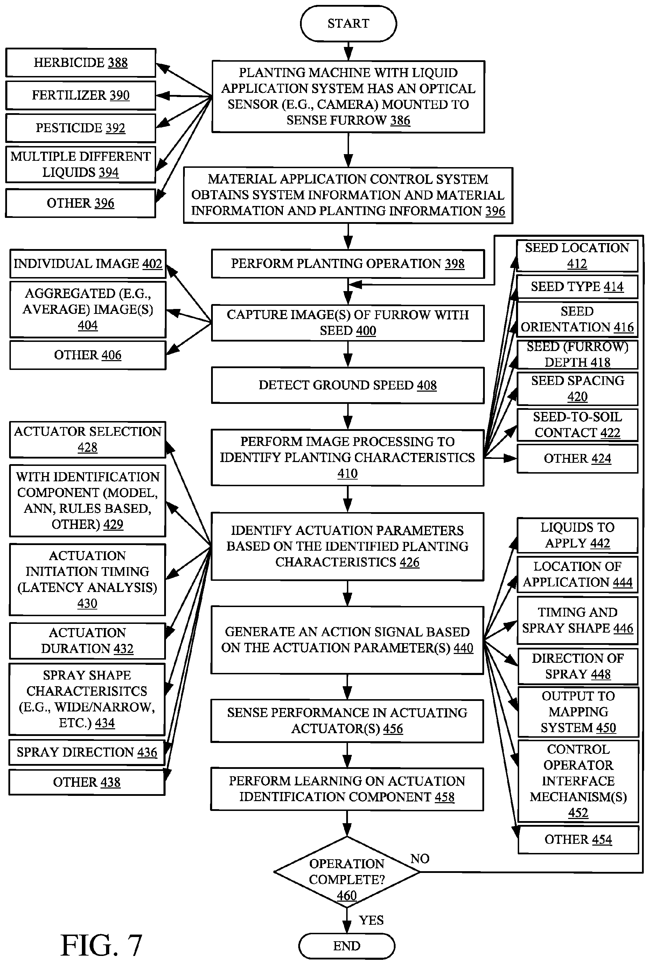

FIG. 7 is a flow diagram illustrating one example of the operation of material application control system 113 in generating outputs to control the application of material based upon a seed sensor signal 304 generated by the optical seed sensor 122 which captures an image of, and senses seeds in, the furrow generated by row unit 106. It is first assumed that a planting machine with a liquid application system has a camera or other optical seed sensor 122 mounted to capture an image of a furrow that is opened by the planting machine. Having a planting machine configured in this way is indicated by block 386 in the flow diagram of FIG. 7. The liquid to be applied can be herbicide 388, fertilizer 390, and/or pesticide 392, or other material. In another example, there may be multiple different liquids that are to be applied, as indicated by block 394. The machine can be configured with a liquid application system and an optical seed sensor in other ways as well, as indicated by block 396.

The material application control system 113 obtains system information 280, material information 282, and planting information 284, as indicated by block 396 in the flow diagram of FIG. 7. As discussed above, such information can be sensed by sensors or obtained from a data store 254 or obtained from a remote data store, or obtained in other ways.

The planting machine then begins to perform a planting operation, as indicated by block 398. The optical sensor captures one or more images of the furrow opened by the planting machine, to detect seeds in the furrow, as indicated by block 400. In one example, image processing is performed on individual images 402 to identify the seed and other planting characteristics. In another example, the image processing can be performed on aggregated (e.g., averaged) images 404. The images can be captured in other ways as well, as indicated by block 406.

Event driven processing system 266 then detects the ground speed of the planting machine (e.g., the row unit 106) based on the input from ground speed sensor 306, as indicated by block 408. Either the optical seed sensor 122 or the material application control system 113 has an image processor that performs image processing on the captured images to identify planting characteristics, as indicated by block 410 in the flow diagram of FIG. 7. As discussed above, the image processing can be performed by image processor 367 on event driven processing system 266, or by an image processor on optical seed sensor 122, or by an image processor located at a remote location, such as in the cloud, or by an image processor located elsewhere. In one example, the planting characteristics identified by the image processor include seed location 412 that identifies the location of a detected seed in the furrow in a local or global coordinate system or relative to other items, such as relative to actuator 109, application tip 119, the centerline of the furrow, etc. In another example, the planting characteristics include seed type 414, seed orientation 416, seed (or furrow) depth 418, seed spacing 420, seed-to-soil contact 422, and/or any of a wide variety of other planting characteristics 424.

Based upon the planting characteristics, event driven processing system 266 identifies actuation parameters, as indicated by block 426 in the flow diagram of FIG. 7, that can be used to determine when, where, and for how long, to actuate actuators. For instance, actuator selector 369 selects one of the actuators or a plurality of the actuators for actuation based upon the planting characteristics, as indicated by block 428. Actuator time offset generator 370 and pulse timing generator 372 then generate an output indicative of actuation initiation timing (e.g., by performing a latency analysis of the components used to apply the material and based on properties of the material itself, the speed of the row unit, the location of the actuator, etc.) to determine when the actuator is to be actuated, as indicated by block 430 in the flow diagram of FIG. 7. Pulse duration generator 374 determines the duration over which the actuator is to be actuated based on the planting characteristics, as indicated by block 432. Spray shape identification system 384 identifies the spray shape characteristics (e.g., the spray should be wide, narrow, conical, etc.) based on the planting characteristics, as indicated by block 434, and direction identification system 382 identifies the spray direction indicating how the actuator should be aimed to apply material to the furrow based on the planting characteristics as indicated by block 436. Identifying the actuation parameters based upon the planting characteristics can be done in a wide variety of other ways as well, as indicated by block 438.

Material application control system 113 then generates an action signal based upon the actuation parameters, as indicated by block 440 in the flow diagram of FIG. 7. For instance, actuator control signal generator 258 and fluid pressure control signal generator 260 can generate control signals that control the actuators or to actuate the specific nozzles or pumps, or other valves or actuators to apply desired liquids in a desired way, as indicated by block 442. The control signals can be generated to apply the material at a particular location, as indicated by block 444. The control signals can control the timing, volume, and spray shape of the material being applied, as indicated by block 446, as well as the direction that the material is applied, as indicated by block 448. The control signal generators can also control communication system 252 to communicate an output to a mapping system or another system so that the planting characteristics and actuation parameters can be mapped or stored in another way, as indicated by block 450. The control signal generators can generate outputs to control operator interface logic 262 to output the various information to operators, as indicated by block 452. The action signal can be generated in a wide variety of other ways to perform other actions as indicated by block 454.

The performance sensors 315 then sense the performance of row unit 106 in applying material as desired. For instance, if the material is to be applied at the seed location or between seeds, then performance sensors 315 may sense the presence and location of the material and determine whether the presence and location corresponds to the location of the seed. Sensing the performance in actuating the actuators is indicated by block 456 in the flow diagram of FIG. 7 and can be done in a wide variety of other ways as well. Machine learning system 385 then performs learning to improve the performance of event driven processing system 266 and control signal generators 258 and 260 based upon the sensed performance. Performing machine learning to improve performance is indicated by block 458 in the flow diagram of FIG. 7. Machine learning system 385 can perform supervised learning, unsupervised learning, or reinforcement learning. The system 385 can implement a regression algorithm, a classification algorithm, or another algorithm. Such algorithms can implement learning using such things as linear regression, K-means clustering, random forest, decision tree, naive Bayes, support vector machines, logistic regression, etc. For instance, where the processors, generators, and systems in event driven processing system 266 are artificial neural networks, then machine learning system 385 can detect the performance of the material application control system 113 and modify the values in the artificial neural network to improve performance. This is just one way in which machine learning system 385 can perform machine learning to improve performance of the material application control system 113. Also, system 385 can be implemented using an adaptive/heuristic algorithm as well and need not explicitly incorporate a machine learning algorithm.

Until the planting operation is complete, as detected at block 460 in the flow diagram of FIG. 7, processing reverts to block 400 where the optical seed sensor 122 continues to capture images of the furrow as seeds are placed in the furrow, as indicated at block 400. It can thus be seen that the present description describes a system in which an optical sensor senses the furrow to perform seed detection so that planting characteristics can be identified based upon the images captured by the optical seed sensor. The images can be processed so that actuators can be controlled to control the location and volume of material to be sprayed relative to the seed location. The material to be applied can also be controlled based upon seed type, seed orientation, seed-to-soil contact, seed depth, and/or other planting characteristics obtained by processing the captured image(s).

The present discussion has mentioned processors and servers. In one example, the processors and servers include computer processors with associated memory and timing circuitry, not separately shown. The processors and servers are functional parts of the systems or devices to which they belong and are activated by, and facilitate the functionality of the other components or items in those systems.

Also, a number of user interface displays (UI) have been discussed. The UI displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, they can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which the mechanisms are displayed is a touch sensitive screen, they can be actuated using touch gestures. Also, where the device that displays the mechanisms has speech recognition components, the mechanisms can be actuated using speech commands.

A number of data stores have also been discussed. It will be noted the data stores can each be broken into multiple data stores. All data stores can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

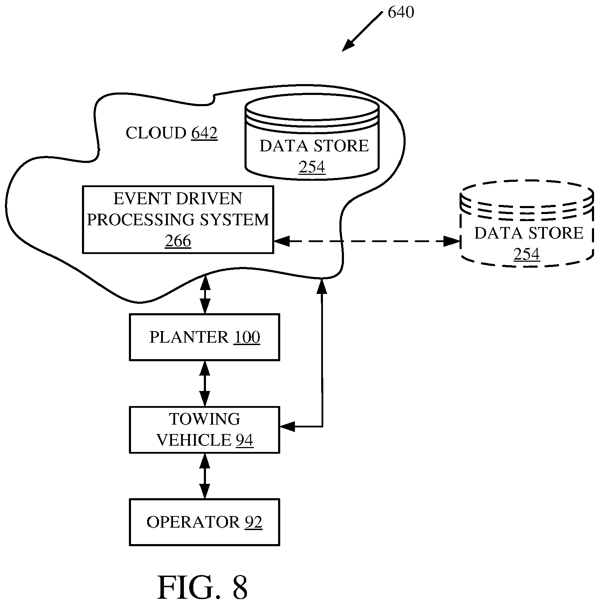

FIG. 8 is a block diagram of the architecture, shown in FIG. 1, except that it communicates with elements in a remote server architecture 640. In an example, remote server architecture 640 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in FIGS. 5 and 6 as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or components and functions can be installed on client devices directly, or in other ways.

In the example shown in FIG. 8, some items are similar to those shown in FIGS. 1, 5, and 6 and they are similarly numbered. FIG. 8 specifically shows that event driven processing system 266 and data store 254 can be located at a remote server location 642. Therefore, system 113 accesses those systems through remote server location 642.

FIG. 8 also depicts another example of a remote server architecture. FIG. 8 shows that it is also contemplated that some elements of FIGS. 1, 5, and 6 can be disposed at remote server location 642 while others are not. By way of example, data store 254 can be disposed at a location separate from location 642, and accessed through the remote server at location 642. Regardless of where the items are located, the items can be accessed directly by system 113, through a network (either a wide area network or a local area network), the items can be hosted at a remote site by a service, or they can be provided as a service, or accessed by a connection service that resides in a remote location. Also, the data can be stored in substantially any location and intermittently accessed by, or forwarded to, interested parties. For instance, physical carriers can be used instead of, or in addition to, electromagnetic wave carriers. In such an example, where cell coverage is poor or nonexistent, another mobile machine (such as a fuel truck) can have an automated information collection system. As the planter comes close to the fuel truck for fueling, the system automatically collects the information from the planter using any type of ad-hoc wireless connection. The collected information can then be forwarded to the main network as the fuel truck reaches a location where there is cellular coverage (or other wireless coverage). For instance, the fuel truck may enter a covered location when traveling to fuel other machines or when at a main fuel storage location. All of these architectures are contemplated herein. Further, the information can be stored on the planter until the planter enters a covered location. The planter, itself, can then send the information to the main network.

It will also be noted that the elements of FIGS. 1, 5, and 6, or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

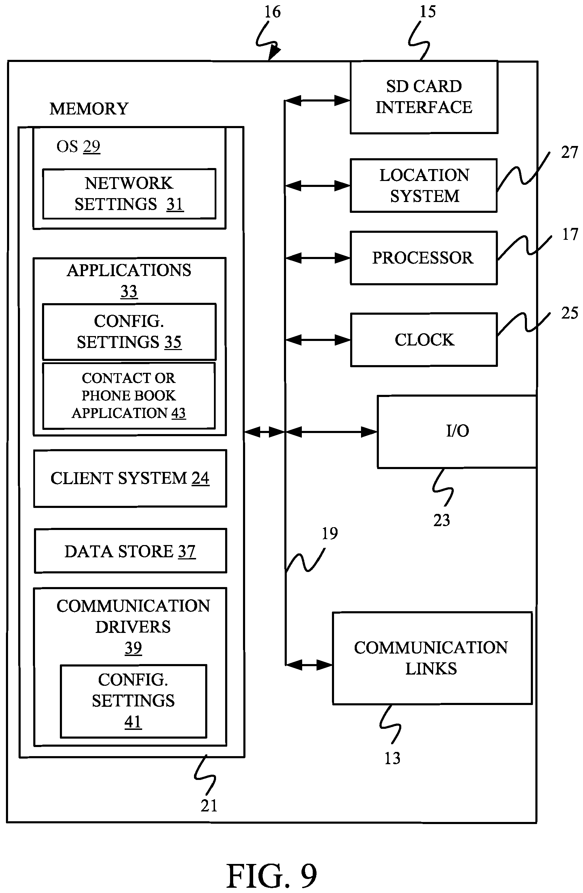

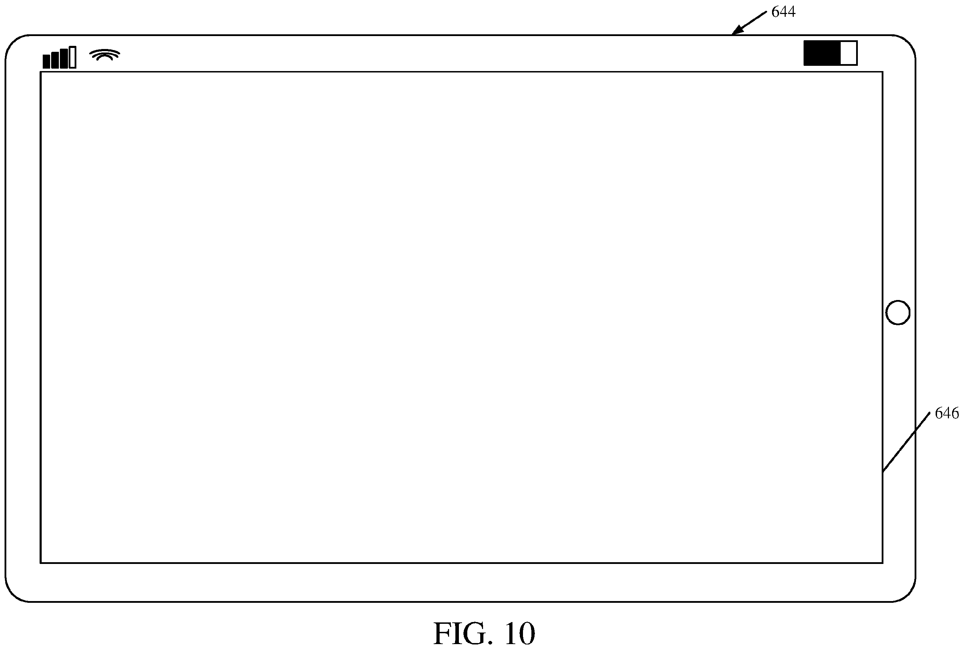

FIG. 9 is a simplified block diagram of one illustrative example of a handheld or mobile computing device that can be used as a user's or client's hand held device 16, in which the present system (or parts of it) can be deployed. For instance, a mobile device can be deployed in the operator compartment of towing vehicle 94 for use in generating, processing, or displaying the application data. FIGS. 10-11 are examples of handheld or mobile devices.

FIG. 9 provides a general block diagram of the components of a client device 16 that can run some components shown in FIGS. 1, 5, and 6, that interacts with them, or both. In the device 16, a communications link 13 is provided that allows the handheld device to communicate with other computing devices and in some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well. Clock 25 illustratively comprises a real time clock component that outputs a time and date. It can also, illustratively, provide timing functions for processor 17.

Location system 27 illustratively includes a component that outputs a current geographical location of device 16. This component can include, for instance, a global positioning system (GPS) receiver, a LORAN system, a dead reckoning system, a cellular triangulation system, or other positioning system. The component can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and nonvolatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 10 shows one example in which device 16 (from FIG. 9) is a tablet computer 644. In FIG. 10, computer 644 is shown with user interface display screen 646. Screen 646 can be a touch screen or a pen-enabled interface that receives inputs from a pen or stylus. Computer 644 can also use an on-screen virtual keyboard. Of course, computer 644 might also be attached to a keyboard or other user input device through a suitable attachment mechanism, such as a wireless link or USB port, for instance. Computer 644 can also illustratively receive voice inputs as well.

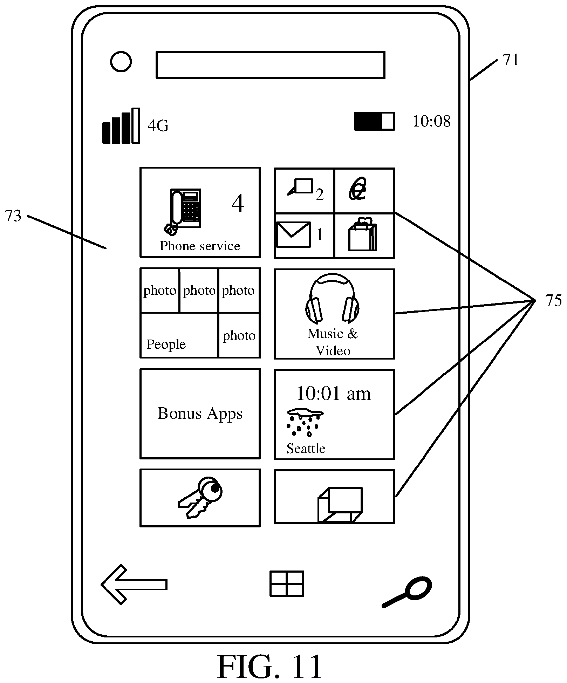

FIG. 11 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

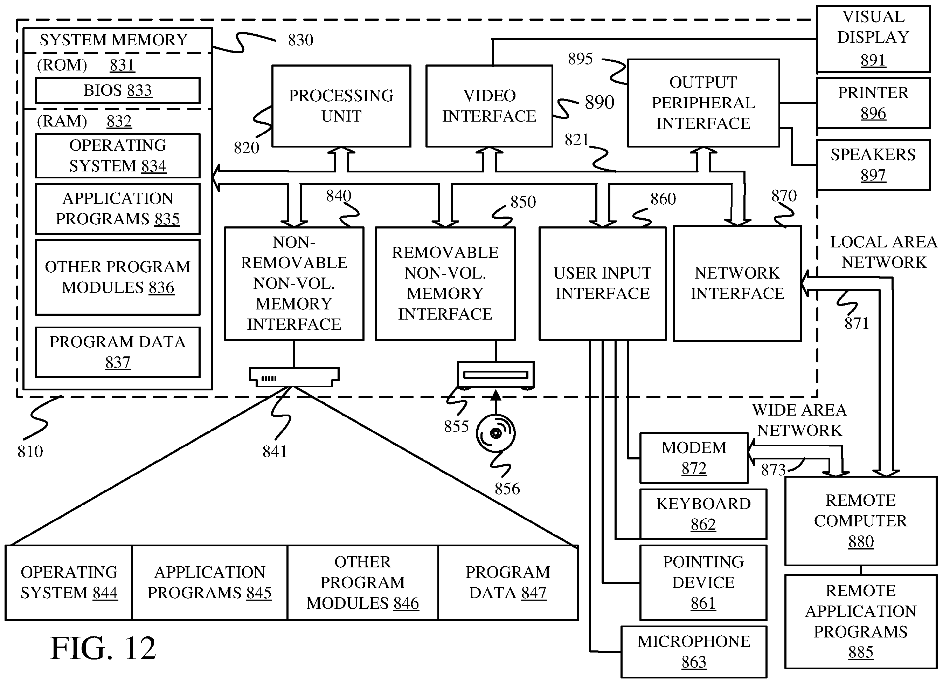

FIG. 12 is one example of a computing environment in which elements of FIGS. 1, 5, and 6, or parts of it, (for example) can be deployed. With reference to FIG. 12, an example system for implementing some embodiments includes a general-purpose computing device in the form of a computer 810 programmed to operate as described above. Components of computer 810 may include, but are not limited to, a processing unit 820 (which can comprise processors from previous Figures), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to FIGS. 1, 5, and 6 can be deployed in corresponding portions of FIG. 12.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium, which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal. The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 12 illustrates operating system 834, application programs 835, other program modules 836, and program data 837. The computer 810 may also include other removable/non-removable volatile/nonvolatile computer storage media. By way of example only, FIG. 12 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 12, provide storage of computer readable instructions, data structures, program modules and other data for the computer 810. In FIG. 12, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 12 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above.

Rather, the specific features and acts described above are disclosed as example forms of implementing the claims.

## Claims

1. A planting machine (100), comprising:
a furrow opener (114) that opens a furrow as the planting machine (100) moves across a field;
a seed delivery system (120, 166) that delivers seeds to seed positions in the furrow;
an optical seed detector (140) that captures an image of the furrow;
an image processor (367) that identifies a planting characteristic based on the image;
an actuator (109) that is actuated to apply a material to the field;
an actuation identification system (256) that generates an actuation timing indicator indicative of a timing for actuating the actuator (109) to apply the material at material placement positions based on the planting characteristic; and
an actuator control signal generator (258) that receives the actuation timing indicator and generates an actuator control signal based on the actuation timing indicator to control the actuator (109) to apply the material to the field.

2. The planting machine (100) of claim 1, wherein the image processor (367) is configured to identify, as the planting characteristic, a seed position of a seed within the furrow, wherein the actuation identification system (256) comprises:
a direction identification system (382) that identifies a direction to apply the material from the actuator (109) based on the seed position.

3. The planting machine (100) of claim 1 or 2, wherein the actuator control signal generator (258) is configured to generate, as the actuator control signal, a direction control signal to control a direction in which the actuator (109) applies the material based on the identified direction.

4. The planting machine (100) of one of the claims 1 to 3, wherein the actuator (109) comprises:
a first actuator (109A-109D) that is actuated to apply a first material to the field; and
a second actuator (109A-109D) that is actuated to apply a second material to the field.

5. The planting machine (100) of claim 4, wherein the actuation identification system (256) comprises:
an actuator selector (369) configured to select at least one of the first actuator (109A-109D) or the second actuator (109A-109D) for actuation based on the planting characteristic.

6. The planting machine (100) of claim 4 or 5, wherein the image processor (367) is configured to identify, as the planting characteristic, a seed type indicative of a type of a seed within the image of the furrow, and wherein the actuator selector selects the first actuator (109A-109D) or the second actuator (109A-109D) based on the seed type.

7. The planting machine (100) of one of the claims 1 to 6, wherein the image processor (367) is configured to identify, as the planting characteristic, a seed orientation indicative of an orientation of a seed within the image of the furrow, wherein the actuation identification system (256) is configured to generate an actuation parameter based on the seed orientation and wherein the actuator control signal generator (258) is configured to generate the actuator control signal based on the actuation parameter.

8. The planting machine (100) of one of the claims 1 to 7, wherein the image processor (367) is configured to identify, as the planting characteristic, a seed depth indicative of a planting depth of a seed within the image of the furrow, wherein the actuation identification system (256) is configured to generate an actuation parameter based on the seed depth and wherein the actuator control signal generator (258) is configured to generate the actuator control signal based on the actuation parameter.

9. The planting machine (100) of one of the claims 1 to 8, wherein the image processor (367) is configured to identify, as the planting characteristic, a seed-to-soil contact metric indicative of a quality of contact between a seed and soil within the image of the furrow, wherein the actuation identification system (256) is configured to generate an actuation parameter based on the seed-to-soil contact metric and wherein the actuator control signal generator (258) is configured to generate the actuator control signal based on the actuation parameter.

10. The planting machine (100) of one of the claims 1 to 9, wherein the image processor (367) is configured to identify, as the planting characteristic, a seed spacing metric indicative of a spacing between seeds within the image of the furrow, wherein the actuation identification system (256) is configured to generate an actuation parameter based on the seed spacing metric and wherein the actuator control signal generator (258) is configured to generate the actuator control signal based on the actuation parameter.

11. The planting machine (100) of one of the claims 1 to 10, wherein the actuation identification system (256) comprises:
a pulse timing generator (372) that generates a pulse initiation indicator indicative of a timing when the actuator control signal is to be generated based on the planting characteristic; and
a pulse duration generator (374) that generates a pulse duration indicator indicative of a duration for which the actuator control signal is to be generated based on the planting characteristic, and wherein the actuator control signal generator (258) generates the actuator control signal based on the pulse initiation indicator and based on the pulse duration indicator.

12. The planting machine (100) of one of the claims 1 to 11, wherein the actuation identification system (256) comprises:
a spray shape identification system (384) that generates a spray shape indicator indicative of a shape of spray of material to be applied by the actuator (109), and wherein the actuator control signal generator (258) generates the actuator control signal based on the spray shape indicator.

13. A method of controlling a planting machine (100) according to claims 1 to 12, the method comprising:
opening a furrow (162) as the planting machine (100) moves across a field;
delivering (398) seeds to seed positions in the furrow;
capturing (400) an image of the furrow;
processing (410) the image to identify a planting characteristic based on the image;
generating (426) an actuation timing indicator indicative of a timing for actuating an actuator (109) to apply material at material placement positions based on the planting characteristic; and
generating (440) an actuator control signal based on the actuation timing indicator to control the actuator (109) to apply the material to the field.

14. The method of claim 13 and further comprising:
capturing the image with an optical detector (140), mounted on the planting machine (100), as the planting machine (100) is delivering seeds to the furrow.
